# EUROPEAN PATENT APPLICATION

(11) **EP 4 407 984 A1**
(43) Date of publication of application: **31.07.2024**
(21) Application number: 22871426.7
(22) Date of filing: 19.05.2022
(51) Int. Cl.: H04N 17/00

(54) **VIDEO QUALITY EVALUATION METHOD AND APPARATUS, ELECTRONIC DEVICE, AND STORAGE MEDIUM**

(30) Priority: 23.09.2021 CN 202111115460
(71) Applicant: ZTE Corporation, Shenzhen, Guangdong 518057 (CN)
(72) Inventor: CHEN, Junjiang, Shenzhen, Guangdong 518057 (CN)
(74) Representative: Boult Wade Tennant LLP
(86) International application number: PCT/CN2022/093999
(87) International publication number: WO 2023/045365

(57) **Abstract**

Embodiments of the present application relate to the technical field of communications, and disclose a video quality evaluation method, comprising: classifying each video in a video set; inputting videos of different categories into different preset models, and acquiring quality evaluation results of the videos by using the preset models. The embodiments of the present application further disclose a video quality evaluation apparatus, an electronic device and a storage medium.

## Description

### CROSS REFERENCE TO RELATED APPLICATIONS

The present application is proposed based on a Chinese patent application No. 202111115460.5, filed on September 23, 2021, and claims the priority of the Chinese patent application, of which the entire contents are incorporated herein by reference.

### TECHNICAL FIELD

Embodiments of the present application relate to the technical field of communications, in particular to a video quality evaluation method and apparatus, an electronic device and a storage medium.

### BACKGROUND

5G (fifth generation mobile communication technology) is a new generation of broadband mobile communication technology with high speed, low delay and large connection characteristics, and will lead the global transition from the mobile Internet era to the mobile Internet of Things era. With the commercialization and popularization of the 5G, video services will also involve a variety of scenes, such as high-definition video calls, autonomous driving and telemedicine. In order to grasp an overall operation status of a video service system timely and accurately, it is urgent to develop an automatic video quality evaluation system to evaluate video quality, and put forward improvement measures for weak links or technical defects of the video quality, so as to continuously improve operation quality of the video service system and meet increasingly high quality demands of users for the video services.

At present, there are two main methods to evaluate video quality: one is subjective quality evaluation by evaluators, and the other is objective quality evaluation by establishing mathematical models. However, because the former evaluation method is carried out manually, the efficiency is low, and it is difficult to deploy and apply on a large scale. The latter evaluation method can only adapt to a single scene because the mathematical model established is for the video in a single scene, and cannot get accurate evaluation results for the video in a plurality of scenes.

### SUMMARY

An embodiment of the present application provides a video quality evaluation method, including: classifying each video in a video set; and inputting videos of different categories into different preset models, and acquiring quality evaluation results of the videos by using the preset models.

An embodiment of the present application further provides a video quality evaluation apparatus, including: an acquiring module, configured to classify each video in a video set; and an evaluation module, configured to input videos of different categories into different preset models, and acquire quality evaluation results of the videos by using the preset models.

An embodiment of the present application further provides an electronic device, including: at least one processor; and a memory in communication connection with the at least one processor, wherein the memory stores an instruction able to be executed by the at least one processor, and the instruction is executed by the at least one processor to enable the at least one processor to be able to implement the above video quality evaluation method.

An embodiment of the present application further provides a computer readable storage medium, storing a computer program, and the computer program, when executed by a processor, implements the above video quality evaluation method.

### BRIEF DESCRIPTION OF THE DRAWINGS

One or more embodiments are exemplarily illustrated by accompanying drawings to which they correspond, and these exemplary illustrations do not constitute a limitation to the embodiments.
Fig. 1 is a schematic flow diagram of a video quality evaluation method provided by an embodiment of the present application;
Fig. 2 is a schematic principle diagram of weighted sampling of a video quality evaluation method provided by an embodiment of the present application;
Fig. 3 is another schematic flow diagram of a video quality evaluation method provided by an embodiment of the present application;
Fig. 4 is a schematic principle diagram of a measurement mapping evaluation model in a video quality evaluation method provided by an embodiment of the present application;
Fig. 5 is another schematic flow diagram of a video quality evaluation method provided by an embodiment of the present application;
Fig. 6 is a schematic diagram of video data collection of a video quality evaluation method provided by an embodiment of the present application;
Fig. 7 is a schematic principle diagram of an end-to-end evaluation model in a video quality evaluation method provided by an embodiment of the present application;
Fig. 8 is a schematic principle diagram of a video quality evaluation method provided by an embodiment of the present application;
Fig. 9 is a schematic diagram of training, verifying and testing of preset models in a video quality evaluation method provided by an embodiment of the present application;
Fig. 10 is a schematic diagram of a modular structure of a video quality evaluation apparatus provided by an embodiment of the present application; and
Fig. 11 is a schematic structural diagram of an electronic device provided by an embodiment of the present application.

### DETAILED DESCRIPTION

To make the objectives, technical solutions and advantages of embodiments of the present disclosure clearer, a detailed description of the embodiments of the present application will be given below in combination with accompanying drawings. However, it may be understood by those of ordinary skill in the art that in the embodiments of the present application, many technical details are put forward in order to give a reader a better understanding of the present application. However, even without these technical details and various variations and modifications based on the following embodiments, it is possible to achieve the technical solution of the present application. The following embodiments are divided for convenience of description and shall not constitute any limitation to a specific implementation mode of the present application. The embodiments may be combined and referred to each other on the premise of not contradicting each other.

One embodiment relates to a video quality evaluation method, which classifies each video in a video set, inputs videos of different categories into different preset models, and acquires quality evaluation results of the videos by using the different preset models. Because the preset models are used to evaluate video quality, it can realize automatic evaluation of the video quality, which is high in efficiency and suitable for large-scale deployment and application. At the same time, by inputting the different videos into the different preset models and using the different preset models to acquire the video quality evaluation results, the videos of different categories in different scenes can get the quality evaluation results that adapt to the categories, so that video quality evaluation can adapt to videos in various scenes and accurate evaluation results can be obtained for the video quality in various scenes.

It should be noted that an executive body of the video quality evaluation method provided by the embodiment of the present application may be a server side, wherein the server side may be realized by a single server or a cluster composed of a plurality of servers.

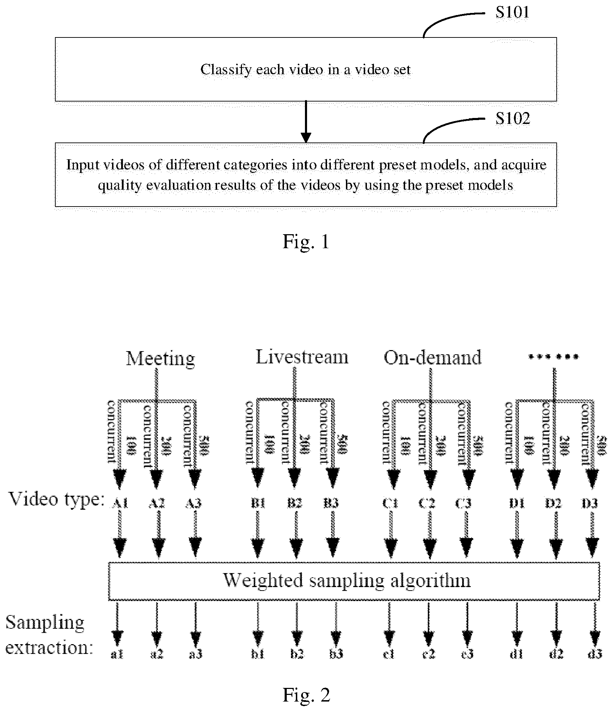

A specific process of the video quality evaluation method provided by the embodiment of the present application is shown in Fig. 1, including the following steps:

S101: each video in a video set is classified.

In a specific example, the classifying each video in the video set may be that each video in the video set is classified according to at least one of data in functional scenario, video length, number of concurrent access, access type, and network environment parameters to obtain a category of each video. For example, according to the functional scenario, it may be divided into: meeting, livestream or on-demand, or other categories; and according to the video length, it may be divided into: a long video, a short video and other categories. A specific classification method may be carried out according to actual needs, which is not specifically limited in the embodiment of the present application.

S102: videos of different categories are input into different preset models, and quality evaluation results of the videos are acquired by using the preset models.

It may be understandable that the acquired quality evaluation results of the videos are different when different preset models are used. In addition, when video data from different locations in a video is input into the same preset models, the acquired quality evaluation results of the video may also be different. For example, the video quality evaluation results obtained when the videos transmitted over a video link are input into the preset models may be different from those obtained when decoded videos are input into the preset models. There may be two or more preset models, so as to realize the quality evaluation of the videos of the different categories. A specific decision may be made according to a classification method for each video. The type and quantity of the preset models are not specifically limited in the embodiment of the present application.

Since the number of the videos included in the video set may be massive, if video quality evaluation is performed on each video in the video set, computing power of the server side may be insufficient and meanwhile, it is not meaningful. In a specific example, before the videos of different categories are input into the different preset models, the method further includes: adding labels and/or weights to each video in the video set, and extracting a part of videos in the video set by adopting a weighted sampling algorithm according to the labels and/or the weights; and the inputting the videos of different categories into the different preset models includes: inputting the videos of different categories in the part of videos into the different preset models, wherein a schematic principle diagram of weighted sampling on the videos may be referred to Fig. 2.

When the labels and/or weights are added to each video in the video set, the labels and/or weights may be added to each video according to the number of concurrent access, network environment, a usage scale, etc. For example, if the videos are in a 5G network environment, a 5G label is added; if the videos are in a 4G network environment, a 4G label is added; for another example, if the number of concurrent access is large, a higher weight is added; and if the number of concurrent access is small, a lower weight is added. A specific way of adding the labels and weights may be set according to actual needs, which is not specifically limited in the embodiment of the present application. After adding the labels and/or weights to each video, the weighted sampling algorithm for collection of the videos is sampled, so that more videos with high weights in the video set may be sampled, and fewer videos with low weights may be sampled, and representative videos obtained through extraction are evaluated, which may reduce system pressure brought by massive data.

By adding the labels and/or weights to each video, the weighted sampling algorithm is adopted to extract the part of the videos in the video set according to the labels and/or weights, and the video quality evaluation is performed on the extracted part of the videos. The representative videos may be extracted for quality evaluation, which may better reflect overall video quality of the video set. At the same time, dimensionality reduction is performed on massive video sets, which reduces the burden on the server side.

According to the video quality evaluation method provided by the embodiment of the present application, the videos of different categories are input into the different preset models by acquiring the category of each video in the video set, and the quality evaluation results of the videos are acquired by using the different preset models. Because the preset models are used to evaluate the video quality, the automatic evaluation of the video quality may be realized, which is high in efficiency and suitable for large-scale deployment and application. At the same time, the different videos are input into the different preset models by acquiring the categories of the videos, and then the different preset models are used to acquire the video quality evaluation results, which can make the videos of different categories in the different scenes get quality evaluation results that adapt to the categories, so that the video quality evaluation may adapt to the videos in the various scenes, and the video quality of the various scenes may get the accurate evaluation results.

In a specific example, the videos in the video set include videos of a first category, and the preset models include a measurement mapping evaluation model; before inputting (S102) the videos of different categories into the different preset models, the video quality evaluation method provided by the embodiment of the present application further includes: acquiring transmission characteristic data of the videos on the video link; and the inputting (S102) the videos of different categories into the different preset models, and acquiring the quality evaluation results of the videos by using the preset models, includes: inputting transmission characteristic data of the videos of the first category into the measurement mapping evaluation model, acquiring a first score of the videos of the first category by using the measurement mapping evaluation model, and outputting the first score after being evaluated by the measurement mapping evaluation model according to the transmission characteristic data.

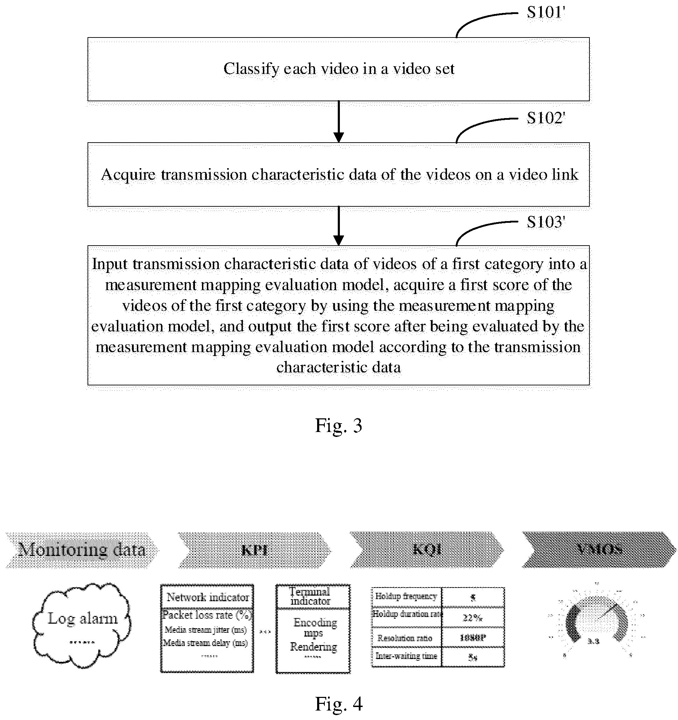

Please refer to Fig. 3, which is another schematic flow diagram of a video quality evaluation method provided by an embodiment of the present application, specifically including the following steps:
S101': each video in a video set is classified.
5102': transmission characteristic data of the videos on a video link is acquired.

The transmission characteristic data refers to transmission related characteristic data of the videos on the video link, such as a packet loss rate, a frame loss rate, delay, or jitter or other characteristic data.

In order to enable the trained measurement mapping evaluation model to be able to realize the quality evaluation of all videos, the transmission characteristic data that each video has may be selected when the measurement mapping evaluation model is trained. In addition, when the measurement mapping evaluation model is trained, the more the transmission characteristic data input, the more accurate the quality evaluation results obtained by the measurement mapping evaluation model.

S103': the transmission characteristic data of the videos of the first category is input into the measurement mapping evaluation model, the first score of the videos of the first category is acquired by using the measurement mapping evaluation model, and the first score is output after being evaluated by the measurement mapping evaluation model according to the transmission characteristic data.

When the measurement mapping evaluation model is specifically implemented, as shown in Fig. 4, a key performance indication (KPI) may be obtained according to monitoring data (such as logs) of the videos, the KPI is taken as the transmission characteristic data, then, the KPI is mapped to key quality indicators (KQIs), finally, the KQIs are mapped to a video mean opinion score (VMOS), and the VMOS is used as the first score output by the measurement mapping evaluation model. Through the above mappings, if the VMOS is low, such as lower than a certain score, abnormal transmission characteristic data in the transmission characteristic data may be sent in a backward deducing mode, so that problems causing video quality degradation may be located while the video quality evaluation results are obtained, to facilitate the improvement of the video quality.

It should be understood that the evaluation of the video quality is generally performed by comparing a video watched by a user with an original video, and the video quality is determined by comparing the difference between the original video and the watched video. However, in some cases, if the original video is difficult to obtain, it is difficult to determine the video quality by comparing the difference between the original video and the watched video. For example, in a weak network environment, it is difficult to obtain the original video, and at this time, a video quality evaluation score may be obtained according to the transmission characteristic data by obtaining the transmission characteristic data on the video link, so as to achieve the video quality evaluation. Accordingly, the videos in the weak network environment may be classified as videos of the first category.

In a specific example, after acquiring the first score of the videos of the first category by using the measurement mapping evaluation model, the method further includes: if the first score is less than a first expected score, abnormal transmission characteristic data of the videos on the video link is backwards deduced and located according to the measurement mapping evaluation model, and/or video quality warning information is output according to the first score.

The first expected score may be set according to actual needs, which is not specifically limited herein. When the abnormal transmission characteristic data of the videos on the video link is backwards deduced and located according to the measurement mapping evaluation model, it may be backwards deduced from the above VMOS to KQI, and then backwards deduced from the KQI to KPI, finally, the abnormal transmission characteristic data is located according to the KPI, and corresponding abnormal location is performed.

When the first score is less than the first expected score, the abnormal transmission characteristic data of the videos on the video link is backwards deduced and located according to the measurement mapping evaluation model, and a specific problem may be located when the video quality is poor, so as to make targeted measure improvement. The video quality early warning information may be output according to the first score, so as to enable video users to be able to know information of impending deterioration of the video quality in advance, which improves user experience, and realizes prior prediction of the video quality.

In a specific example, the videos in the video set further include videos of a second category, and the preset models further include an end-to-end evaluation model; before inputting (S102) the videos of different categories into the different preset models, the method further includes: setting one collection point, which is respectively at a front end and a rear end of the video link of the videos, and collecting front-end video data of the videos at the front end and rear-end video data of the videos at the rear end through the collection points; and the inputting (S102) the videos of different categories into the different preset models, and acquiring the quality evaluation results of the videos by using the preset models further includes: inputting the front-end video data and the rear-end video data of the videos of the second category into the end-to-end evaluation model, acquiring a second score of the videos of the second category by using the end-to-end evaluation model, and outputting the second score after comparing a difference between the rear-end video data and the front-end video data by the end-to-end evaluation model.

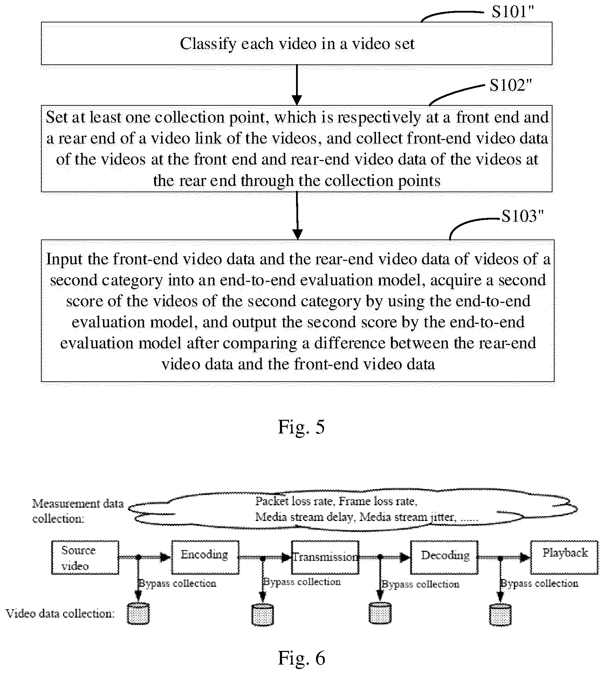

Please refer to Fig. 5, which is another schematic flow diagram of a video quality evaluation method provided by an embodiment of the present application, specifically including the following steps:
S101 ": each video in a video set is classified.
S102": at least one collection point is set respectively at the front end and the rear end of the video link of the videos, and the front-end video data of the videos at the front end and the rear-end video data of the videos at the rear end are collected through the collection points.

In a specific example, when the front-end video data or rear-end video data is collected through the collection points, the front-end video data and the rear-end video data are collected at the collection points in a bypass replication mode, so that a normal video link process is not affected, no additional burden is generated, and the users are unaware.

Please refer to Fig. 6, which is a schematic diagram of video data collection by a video quality evaluation method provided by an embodiment of the present application. As shown in Fig. 6, the collection points may be set before encoding, before transmission, after transmission and after encoding of the video link respectively, and the front-end video data and the rear-end video data may be acquired in a bypass replication mode.

S103": the front-end video data and the rear-end video data of the videos of the second category are input into the end-to-end evaluation model, a second score of the videos of the second category is acquired by using the end-to-end evaluation model, and the second score is output by the end-to-end evaluation model after comparing the difference between the rear-end video data and the front-end video data.

In the construction of the end-to-end evaluation model, machine learning, deep learning and other technologies may be used to construct a variety of full-reference algorithms, for example, a PSNR, a VMAF, a DVQA, etc. serve as basic networks to form an end-to-end evaluation algorithm set, and finally the end-to-end evaluation model is obtained through training. When the basic networks are selected, it may be determined according to computing power and quality requirements of the server side. For example, in a link before and after encoding, the VMAF may be selected as the basic network, which can save the computing power of the server side; and for another example, in a link of a production end and a playback end of the videos, the DVQA may be selected as the basic network, which may accurately extract spatio-temporal joint characteristics of the videos.

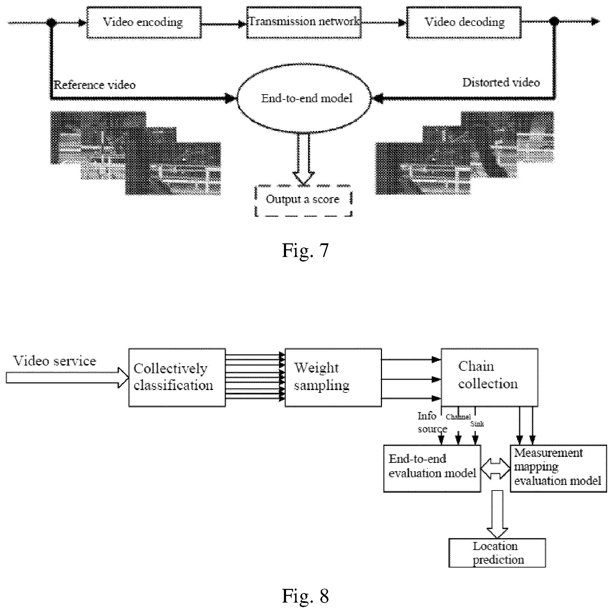

Please refer to Fig. 7, which is a schematic principle diagram of an end-to-end evaluation model in a video quality evaluation method provided by an embodiment of the present application. A distorted video in the figure is the rear-end video data, while a reference video is the front-end video data, the reference video and the distorted video are of the same type and within the same time period, and they refer to relative concepts, may be before encoding and after decoding, or may also be before and after encoding, as long as there is a difference (loss) between the two, that is, they may be used for comparison. In other words, the front-end video data and the rear-end video data may respectively refer to the video data before encoding and the video data after decoding, or may also refer to the video data before encoding and the video data after encoding.

It should be understood that in a case that the original video may be obtained in a good network environment, the quality evaluation may be carried out by comparing the original video before and after transmission. Therefore, compared with a condition of classifying the videos of the first category, the videos in a non-weak network environment may be classified into the videos of the second category.

The video data is collected by setting the collection points, which is respectively at the front end and the rear end of the video link, and then the collected front-end video data and rear-end video data are input into the end-to-end evaluation model to obtain quality evaluation results of the videos of the second category, which may implement the quality evaluation of the videos of the second category.

In a specific example, after acquiring (S103') the second score of the videos of the second category by using the end-to-end evaluation module, the method further includes: if the second score is less than a second expected score, inputting transmission characteristic data of the videos of the second category into the measurement mapping evaluation model, acquiring a first score of the videos of the second category by using the measurement mapping evaluation model, and/or outputting video quality warning information according to the second score.

The second expected score may be set according to actual needs, which is not specifically limited in the embodiment of the present application. It should be understood that when acquiring (S102') the transmission characteristic data of the videos on the video link, the transmission characteristic data of all videos (or all sampled videos if sampling) in the videos is obtained, including the videos of the first category and the videos of the second category. Therefore, the transmission characteristic data of the videos of the second category may be directly input into the measurement mapping evaluation model to obtain the first score. Continuously referring to Fig. 6, when collecting the video data through the collection points, the transmission characteristic data (that is, the measurement data in the figure) of the videos may be collected at the same time.

When the score is lower than the expected score, the transmission characteristic data of the videos of the second category is input into the measurement mapping evaluation model, and the first score of the videos of the second category is obtained by using the measurement mapping evaluation model, and the video quality may be further evaluated from two dimensions. At the same time, since the measurement mapping model gets the score through the transmission characteristic data, the abnormal transmission characteristic data may be further backwards deduced according to the score, so as to realize the problem location for the video quality. In addition, the video quality early warning information may be output according to the second score, to enable video users to know the information of the impending deterioration of the video quality in advance, which improves user experience, and realizes the prior prediction of the video quality.

Please refer to Fig. 8, which is a schematic principle diagram of a video quality evaluation method provided by an embodiment of the present application. Specifically, the video set in the video service is collectively classified, part of the videos is extracted after weighted sampling, and then link data collection is performed on the extracted part of videos. The measurement mapping model is used for video quality evaluation for the videos of the first category, and the end-to-end evaluation model is used for video quality evaluation for the videos of the second category. If the score obtained by the end-to-end evaluation model is lower than the expected score, the measurement mapping evaluation model may be adopted for further evaluation, and the abnormal transmission characteristic data may be further analyzed while obtaining another dimension, so as to achieve the corresponding video quality prediction and problem location.

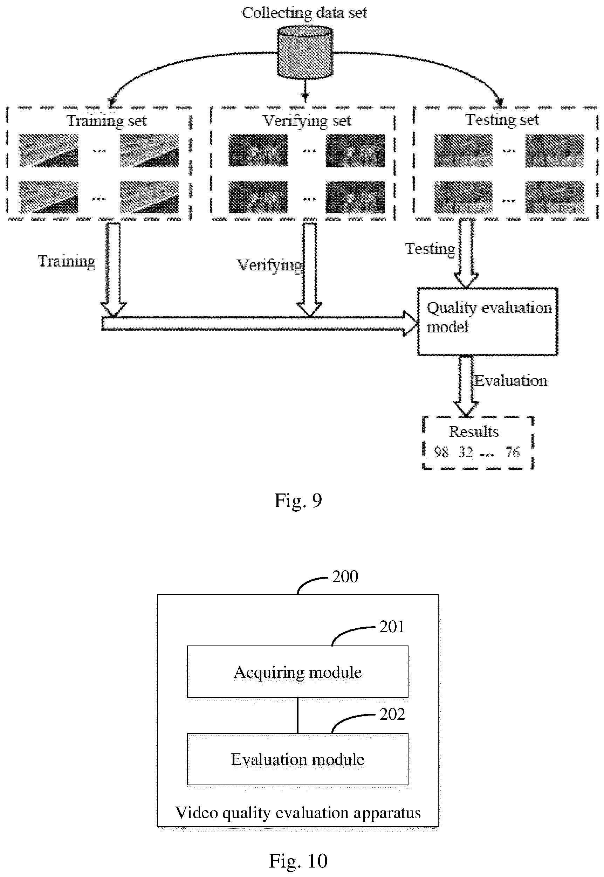

Please refer to Fig. 9, which is a schematic diagram of training, verifying, and testing of preset models in a video quality evaluation method provided by an embodiment of the present disclosure. Specifically, the preset models may collect corresponding data from the video set for training respectively. After training to a certain extent, the corresponding data may be collected to verify the accuracy of the models. After the models reach certain accuracy, the preset models (i.e. the quality evaluation models in the figure) are applied to the test, so that the corresponding quality evaluation results are obtained (the scores of the videos 98, 32 and 76 in the figure).

In addition, those skilled in the art may understand that the steps of the above methods are divided only for clear description, and may be combined into one step or certain steps may be split into a plurality of steps during implementation, as long as the same logical relationship is included, all within the scope of protection of the patent; and insignificant modifications may be added or insignificant design may be introduced to an algorithm or process without changing the core design of the algorithm or process, all within the scope of protection of the patent.

In an embodiment, a video quality evaluation apparatus 200 is involved, as shown in Fig. 10, including an acquiring module 201 and an evaluation module 202, and a function of each module is illustrated in detail as follows:
the acquiring module 201 is configured to classify each video in a video set; and
the evaluation module 202 is configured to input videos of different categories into different preset models and acquire quality evaluation results of the videos by using the preset models.

In an example, the videos include videos of a first category, and the preset models include a measurement mapping evaluation model; the video quality evaluation apparatus 200 provided by the embodiment of the present application further includes a first collection module, wherein the first collection module is used to acquire transmission characteristic data of the videos on a video link; and the evaluation module 202 is further configured to: input transmission characteristic data of the videos of the first category into the measurement mapping evaluation model, and acquire a first score of the videos of the first category by using the measurement mapping evaluation model, and the first score is output after being evaluated by the measurement mapping evaluation model according to the transmission characteristic data.

In an example, the video quality evaluation apparatus 200 provided by the embodiment of the present application further includes an evaluation processing module, configured to: when the first score is less than a first expected score, abnormal transmission characteristic data of the videos on the video link is backwards deduced and located according to the measurement mapping evaluation model, and/or video quality warning information is output according to the first score.

In an example, the videos further include videos of a second category, and the preset models further include an end-to-end evaluation model; the video quality evaluation apparatus 200 provided by the embodiment of the present application further includes a second collection module, wherein the second collection module is configured to set at least one collection point, which is respectively at a front end and a rear end of the video link of the videos; front-end video data of the videos at the front end and rear-end video data of the videos at the rear end are collected through the collection points; and the evaluation module 202 is further configured to input the front-end video data and the rear-end video data of the videos of the second category into the end-to-end evaluation model, and acquire a second score of the videos of the second category by using the end-to-end evaluation model, and the second score is output by the end-to-end evaluation model after comparing a difference between the rear-end video data and the front-end video data.

In an example, the video quality evaluation apparatus 200 provided by the embodiment of the present application further includes a re-evaluation module, wherein the re-evaluation module is configured for: if the second score is lower than a second expected score, the transmission characteristic data of the videos of the second category is input into the measurement mapping evaluation model, and the first score of the videos of the second category is acquired by using the measurement mapping evaluation model, and/or the video quality early warning information is output according to the second score.

In an example, the second collection module is further configured to collect the front-end video data and the rear-end video data on the collection points in a bypass replication mode.

In an example, the acquiring module 201 is further configured to classify each video in the video set according to at least one data from a functional scenario, video length, number of concurrent access, access type and network environment parameters.

In an example, the video quality evaluation apparatus 200 provided by the embodiment of the present application further includes an extraction module, wherein the extraction module is configured to add labels and/or weights to each video in the video set, and extract part of videos in the video set by adopting a weighted sampling algorithm according to the labels and/or the weights; and the evaluation module 202 is further configured to input the videos of the different categories in part of videos into the different preset models.

It is not difficult to find that the present embodiment is an apparatus embodiment corresponding to the embodiment of the above method, and the present embodiment may be implemented in cooperation with the embodiment of the above method. The relevant technical details mentioned in the embodiment of the above method are still valid in the present embodiment and are not repeated here in order to reduce redundancy. Accordingly, the relevant technical details mentioned in the present embodiment may also be applied to the embodiment of the above method.

It is worth mentioning that each module involved in the present embodiment is a logic module, in practical application, a logical unit may be implemented by a physical unit, may also be a part of a physical unit, and may also be a combination of a plurality of physical units. In addition, in order to highlight an innovative part of the present application, units less closely related to the technical issues raised in the present application are not introduced in the present embodiment, but this does not mean that other units do not exist in the present embodiment.

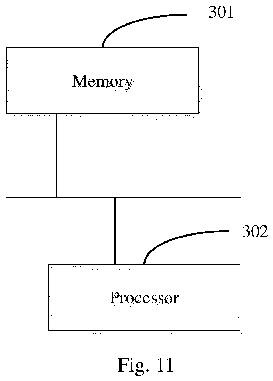

In one embodiment, an electronic device is involved, as shown in Fig. 11, including: at least one processor 301; and a memory 302 in communication connection with the at least one processor 301. The memory 302 stores an instruction able to be executed by the at least one processor 301, and the instruction is executed by the at least one processor 301 to enable the at least one processor 301 to be able to implement the above video quality evaluation method.

The memory and the processor are connected by buses, the buses may include any number of interconnected buses and bridges, and the buses connect various circuits of one or more processors and the memory together. The buses also connect a variety of other circuits of a peripheral device, a voltage regulator, a power management circuit, etc., which are known in the art and are therefore not described further herein. Bus interfaces provide interfaces between the buses and a transceiver. The transceiver may be a single component or a plurality of components, such as a plurality of receivers and transmitters, providing units for communication with various other apparatus on a transmission medium. The data processed by the processor is transmitted on a wireless medium by an antenna, and the antenna further receives the data and transmits it to the processor.

The processor is responsible for managing the buses and general processing, and may further provide a variety of functions including timing, peripheral interfaces, voltage regulation, power management, and other control functions. The memory may be configured to store data that the processor uses to perform operations.

In one embodiment, a computer readable storage medium is involved, storing a computer program. The computer program, when executed by a processor, implements the embodiment of the above method.

That is, it may be understood by those skilled in the art that all or part of the steps in the implementation of the method in the above embodiments may be accomplished by instructing relevant hardware by means of a program, stored in a storage medium, including a plurality of instructions for making a device (which may be a single chip microcomputer, a chip, etc.) or a processor perform all or part of the steps of the method described in various embodiments of the present application. The above storage medium includes: a U disk, a mobile hard disk, a read-only memory (ROM), a random access memory (RAM), a disk or an optical disc and other media that may store program codes.

Those ordinarily skilled in the art may understand that the above embodiments are specific embodiments for implementing the present application, and in practical application, various changes may be made to the embodiments in form and detail without departing from the spirit and scope of the present application.

## Claims

1. A video quality evaluation method, comprising:
classifying each video in a video set; and
inputting videos of different categories into different preset models, and acquiring quality evaluation results of the videos by using the preset models.

2. The video quality evaluation method according to claim 1, wherein the videos comprise videos of a first category, and the preset models comprise a measurement mapping evaluation model;
before the inputting videos of different categories into different preset models, the method further comprises:
acquiring transmission characteristic data of the videos on a video link; and
the inputting videos of different categories into different preset models, and acquiring quality evaluation results of the videos by using the preset models, comprises:
inputting transmission characteristic data of the videos of the first category into the measurement mapping evaluation model, acquiring a first score of the videos of the first category by using the measurement mapping evaluation model, and outputting the first score after being evaluated by the measurement mapping evaluation model according to the transmission characteristic data.

3. The video quality evaluation method according to claim 2, after the acquiring a first score of the videos of the first category by using the measurement mapping evaluation model, further comprising:
backwards deducing and locating abnormal transmission characteristic data of the videos on the video link according to the measurement mapping evaluation model in a case that the first score is less than a first expected score, and/or
outputting video quality warning information according to the first score in a case that the first score is less than a first expected score.

4. The video quality evaluation method according to claim 2 or 3, wherein the videos further comprise videos of a second category, and the preset models further comprise an end-to-end evaluation model;
before the inputting videos of different categories into different preset models, the method further comprises:
setting at least one collection point, which is respectively at a front end and a rear end of the video link of the videos; and
collecting front-end video data of the videos at the front end and rear-end video data of the videos at the rear end through the collection points; and
the inputting videos of different categories into different preset models, and acquiring quality evaluation results of the videos by using the preset models, further comprises:
inputting the front-end video data and the rear-end video data of the videos of the second category into the end-to-end evaluation model, acquiring a second score of the videos of the second category by using the end-to-end evaluation model, and outputting the second score after comparing a difference between the rear-end video data and the front-end video data by the end-to-end evaluation model.

5. The video quality evaluation method according to claim 4, after the acquiring a second score of the videos of the second category by using the end-to-end evaluation model, further comprising:
inputting transmission characteristic data of the videos of the second category into the measurement mapping evaluation model in a case that the second score is less than a second expected score, acquiring a first score of the videos of the second category by using the measurement mapping evaluation model, and/or
outputting video quality warning information according to the second score in a case that the second score is less than a second expected score.

6. The video quality evaluation method according to claim 4 or 5, wherein the collecting front-end video data of the videos at the front end and rear-end video data of the videos at the rear end through the collection points comprises:
collecting the front-end video data and the rear-end video data in a bypass replication mode at the collection points.

7. The video quality evaluation method according to any one of claims 1 to 6, wherein the classifying each video in a video set comprises:
classifying each video in the video set according to at least one data from functional scenario, video length, number of concurrent access, access type and network environment parameters.

8. The video quality evaluation method according to any one of claims 1 to 7, before the inputting videos of different categories into different preset models, further comprising:
adding labels and/or weights to each video in the video set; and
extracting part of videos in the video set by adopting a weighted sampling algorithm according to the labels and/or the weights; wherein
the inputting videos of different categories into different preset models, comprises:
inputting videos of different categories in the part of videos into the different preset models.

9. A video quality evaluation apparatus, comprising:
an acquiring module, configured to classify each video in a video set; and
an evaluation module, configured to input videos of different categories into different preset models, and acquire quality evaluation results of the videos by using the preset models.

10. An electronic device, comprising:
at least one processor; and
a memory in communication connection with the at least one processor, wherein
the memory stores an instruction able to be executed by the at least one processor, and the instruction is executed by the at least one processor to enable the at least one processor to be able to implement the video quality evaluation method according to any one of claims 1 to 8.

11. A computer readable storage medium, storing a computer program, the computer program, when executed by a processor, implementing the video quality evaluation method according to any one of claims 1 to 8.
